# EUROPEAN PATENT APPLICATION

(11) **EP 2 819 027 A1**
(43) Date of publication of application: **31.12.2014**
(21) Application number: 12869328.0
(22) Date of filing: 27.12.2012
(51) Int. Cl.: G06F 17/30

(54) **MOBILE PHONE AND FILE CONFIGURATION METHOD THEREOF**

(30) Priority: 21.02.2012 CN 201210040072
(71) Applicant: Huizhou TCL Mobile Communication Co., Ltd., Huizhou, Guangdong 516006 (CN)
(72) Inventor: XIE, Fang, HuiZhou Guangdong 516006 (CN)
(74) Representative: Petraz, Gilberto Luigi
(86) International application number: PCT/CN2012/087659
(87) International publication number: WO 2013/123816

(57) **Abstract**

A mobile phone and a file configuration method thereof are disclosed. The method comprises: generating, before an application program in the mobile phone is closed to stop processing a target file, habit setting information in response to a user's selection according to the user's use manner for the target file and saving the habit setting information in a configuration record file; storing the configuration record file in a preset directory; determining, when the application program is restarted to process the target file, whether the configuration record file is present in the preset directory; and if yes, reading the configuration record file, retrieving the habit setting information in the configuration record file, and introducing the habit setting information to the application program so as to enable the application program to open the target file according to the habit setting information. In the above manner, the present invention is capable of automatically adjusting a corresponding application program according to a user's use habits for different files, thereby reducing troublesome operations and enhancing the user's experience.

## Description

### TECHNICAL FIELD OF THE INVENTION

The present invention relates to a mobile phone technology, and more particularly, to a mobile phone and a file configuration method thereof.

### BACKGROUND OF THE INVENTION

With the development of technology, a mobile phone has more and more functions and this results in various types of files, such as an audio file, a video file, an image file, and a text file, existing in the mobile phone. The ways to acquire these files may differ, and therefore their original settings may not be the same. For example, A represents a Portable Document Format (PDF) file. It has to zoom in many times each time a user views the file A and the user may feel much more comfortable when the backlight brightness is lowered. As such, it needs to zoom in and adjust the backlight repeatedly every time the user opens this file. These operations are quite troublesome. As another example, a person in a picture B is too small. It has to zoom in many times each time the user views the picture B. Another picture C is too large. It has to zoom out so as to allow the user to view the picture C conveniently. As still another example, at the time audio files are produced, the audio files may have different volume settings. Using a setting to play an audio file D may lead to low sound volume while using the same setting to play an audio file E may lead to a deafening sound, thereby seriously affecting the user's experience.

For the above situations, it is often necessary for mobile phone users to manually adjust application programs corresponding to the plural types of files in order to zoom in or out on pictures, increase or decrease the volume level, or adjust the backlight, thereby resulting in a bad user experience.

Therefore, there is a need to provide a mobile phone and a file configuration method thereof for solving above problems.

### SUMMARY OF THE INVENTION

The technical problem mainly to be solved in the present invention is to provide a mobile phone and a file configuration method for the mobile phone, which are capable of solving the problems existing in the conventional skills that mobile phone users need to manually adjust different settings in an application program for different files.

To solve the above technical problems, one technical scheme adopted in the present invention is to provide a file configuration method for a mobile phone, which comprises the steps of:
a. generating, before an application program in the mobile phone is closed to stop processing a target file, habit setting information in response to a user's selection according to the user's use manner for the target file and saving the habit setting information in a configuration record file;
b. storing the configuration record file in a preset directory;
c. determining, when the application program is restarted to process the target file, whether the configuration record file is present in the preset directory; and
d. if yes, reading the configuration record file, retrieving the habit setting information in the configuration record file, and introducing the habit setting information to the application program so as to enable the application program to open the target file according to the habit setting information; if no, the application program opening the target file according to a default setting;
wherein the configuration record file is given a name identical to a file name of the target file, or based on one of an address where the target file is stored and a characteristic code of the target file.

Amongst, the habit setting information comprises at least one of a font size value, a backlight brightness value, a screen zoom-in value, a screen zoom-out value, and an audio volume value.

Amongst, the preset directory is a directory where the target file is located.

Amongst, in Step b, the configuration record file is given a hidden attribute and is stored in the preset directory.

Amongst, the target file is an audio file, a video file, a text file, or an image file.

To solve the above technical problems, the present invention further provides a file configuration method for a mobile phone, which comprises the steps of:
a. generating, before an application program in the mobile phone is closed to stop processing a target file, habit setting information in response to a user's selection according to the user's use manner for the target file and saving the habit setting information in a configuration record file;
b. storing the configuration record file in a preset directory;
c. determining, when the application program is restarted to process the target file, whether the configuration record file is present in the preset directory; and
d. if yes, reading the configuration record file, retrieving the habit setting information in the configuration record file, and introducing the habit setting information to the application program so as to enable the application program to open the target file according to the habit setting information.

Amongst, in Step d, if no, the application program opens the target file according to a default setting.

Amongst, the configuration record file is given a name identical to a file name of the target file, or based on one of an address where the target file is stored and a characteristic code of the target file.

Amongst, the habit setting information comprises at least one of a font size value, a backlight brightness value, a screen zoom-in value, a screen zoom-out value, and an audio volume value.

Amongst, the preset directory is a directory where the target file is located.

Amongst, in Step b, the configuration record file is given a hidden attribute and is stored in the preset directory.

Amongst, the target file is an audio file, a video file, a text file, or an image file.

To solve the above technical problems, one technical scheme further adopted in the present invention is to provide a mobile phone which comprises:
a configuration record file generating module for generating, before an application program in the mobile phone is closed to stop processing a target file, habit setting information in response to a user's selection according to the user's use manner for the target file and saving the habit setting information in a configuration record file;
a storing module for storing the configuration record file in a preset directory;
a determining module for determining, when the application program is restarted to process the target file, whether the configuration record file is present in the preset directory; and
an inputting module for reading the configuration record file, retrieving the habit setting information in the configuration record file, and introducing the habit setting information to the application program when the determining module determines that the configuration record file is present in the preset directory, so as to enable the application program to open the target file according to the habit setting information.

Amongst, when the determining module determines that the configuration record file is not present in the preset directory, the application program opens the target file according to a default setting.

Amongst, the configuration record file is given a name identical to a file name of the target file, or based on one of an address where the target file is stored and a characteristic code of the target file.

Amongst, the habit setting information comprises at least one of a font size value, a backlight brightness value, a screen zoom-in value, a screen zoom-out value, and an audio volume value.

Amongst, the preset directory is a directory where the target file is located.

Amongst, the storing module stores the configuration record file in the preset directory and gives a hidden attribute to the configuration record file.

Amongst, the target file is an audio file, a video file, a text file, or an image file.

The technical effects of the present invention are described below. In contrast with the conventional skills, the present invention utilizes the configuration record file to record the habit setting information generated when a user uses the application program in the mobile phone to process a file. When the application program opens the file again, the habit setting information is used to configure the application program such that the application program is automatically adjusted according to the user's use habits for different files, thereby reducing troublesome operations and enhancing the user's experience.

### BRIEF DESCRIPTION OF THE DRAWINGS

FIG. 1 is a flow chart of a file configuration method for a mobile phone in accordance with an embodiment of the present invention.
FIG. 2 is a schematic structural diagram showing a mobile phone in accordance with an embodiment of the present invention.

### DETAILED DESCRIPTION OF THE INVENTION

The present invention will be described in further detail by using embodiments in conjunction with the appending drawings.

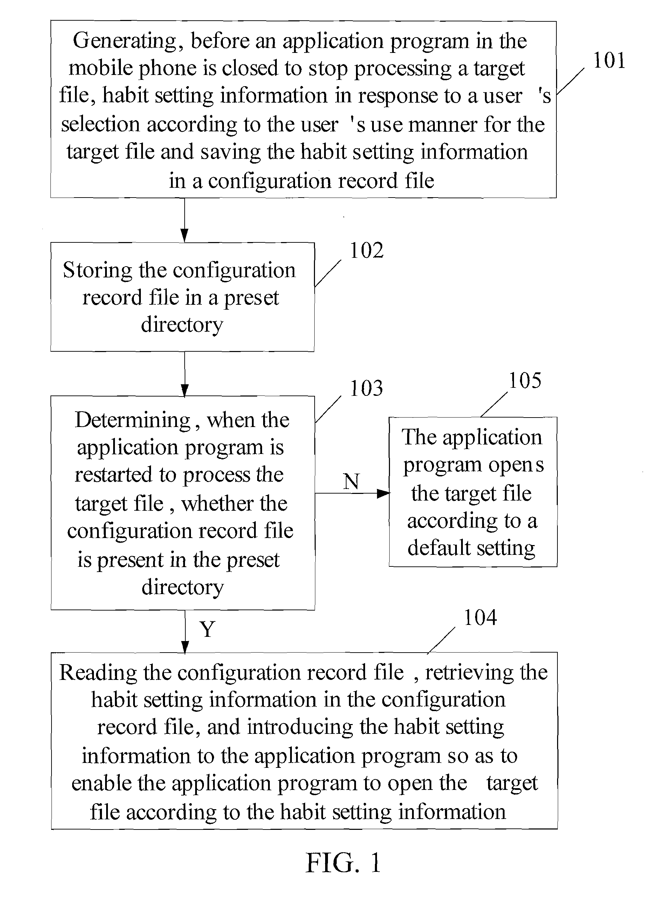

Please refer to FIG. 1, which is a flow chart of a file configuration method for a mobile phone in accordance with an embodiment of the present invention. As shown in FIG. 1, the file configuration method used for the mobile phone comprises the following steps.

In Step 101, before an application program in the mobile phone is closed to stop processing a target file, habit setting information is generated in response to a user's selection according to the user's use manner for the target file, and the habit setting information is saved in a configuration record file.

In this step, the target file is an audio file, a video file, a text file, or an image file. The audio file may be an audio file having a format such as Moving Picture Experts Group Audio Layer III (MP3), lossless compression (APE), Windows Media Audio (WMA), WAV, OGG, Advanced Audio Coding (ACC), etc. The video file may have a format such as Audio Video Interleaved (AVI), MKV, MP4, RMVB, FLV, and WMV. The text file may have a format including TXT, JAR, CHM, etc. The image file may have an image format such as JPG, BMP, and GIF.

The above illustration of file formats does not limit the scope of the present invention. A person skilled in the art can easily realize the use of other types or formats of files able to be used on a mobile phone, based on the suggestion provided by the present invention in combination with the common knowledge in this field. Therefore, the other types or formats of files able to be used on the mobile phone should be included in the scope of the present invention.

The habit setting information is one of a font size value, a backlight brightness value, a screen zoom-in value, a screen zoom-out value, and an audio volume value, or any one combination thereof. Taking PDF for example, the habit setting information is the font size value and the backlight brightness value. Taking MP3 for example, the habit setting information is the audio volume value. In addition, the habit setting information not only comprises one of the font size value, the backlight brightness value, the screen zoom-in value, the screen zoom-out value, and the audio volume value, or any one combination thereof, but also comprises other kinds of settings, for example, the quality of an image being displayed or the audio quality of music being played. Other Setting information for any type of file able to be used on the mobile phone should be included in the scope of the present invention.

In Step 102, the configuration record file is stored in a preset directory.

The preset directory is a directory where the target file is located.

In order to open the configuration record file conveniently and locate and modify it easily, the preset directory of the configuration record file is a directory where the target file is located. Alternatively, the user can change for herself/himself the address where the configuration record file is stored.

In order to avoid incorrect operation, the configuration record file is given a hidden attribute when it is stored. The user can adjust for herself/himself whether to display the configuration record file, and can also edit, modify, and move the configuration file by herself/himself.

In Step 103, when the application program is restarted to process the target file, whether the configuration record file is present in the preset directory is determined. If yes, go to Step 104. If no, go to Step 105.

In the present embodiment, the configuration record file is given a name identical to the file name of the target file. At the time the target file is opened, whether the configuration record file is present or not can be determined by searching the preset directory whether a configuration record file having the same file name with the target file is present.

The determination approaches show a diversity of practice. For example, based on the address where the target file is stored, the address may serve as the file name of the configuration record file. In such a manner, even though the target file is changed with its name, it may not result in the invalidation of the configuration record file. Alternatively, the configuration record file is given a name based on MD5 code or other characteristic codes of the target file. In such a manner, it may not result in the invalidation of the configuration record file, even if the file name or the address of the target file is changed. Any one of the approaches mentioned above can be adopted based on different demands. Many of them can also be adopted at the same time. The user can select one or several determination approaches according to her/his favor or habits.

The above illustration of determination approaches does not limit the scope of the present invention. A person skilled in the art can easily discover other determination approaches based on the suggestion provided by the present invention in combination with the common knowledge in this field. Therefore, other determination approaches should be included in the scope of the present invention.

In Step 104, the configuration record file is read, the habit setting information in the configuration record file is retrieved, and the habit setting information is introduced to the application program such that the application program opens the target file according to the habit setting information.

The following description takes a PDF file as an example, and is a detailed instruction on how to record the habit setting information.

Taking a PDF file for example, the configuration of the PDF file can be set as below.

```
          typedef struct
          {
          ... ...
          FONTSIZE 14;
          ... ...
          BACKGROUPLIGHT 3;
          ... ...
          }Content_Record
```

FONTSIZE records an appropriate font size setting for the document. BACKGROUPLIGHT records an appropriate backlight setting for reading the document. In the above example, the number 14 indicates that the font size is No. 14 and the number 3 indicates that the backlight brightness is level 3.

When Step 102 is executed, the data corresponding to FONTSIZE and BACKGROUPLIGHT in the configuration record file are modified. When Step 104 is executed, the data corresponding to FONTSIZE and BACKGROUPLIGHT are retrieved and are provided to the application program, and the application program adjusts the setting correspondingly based on the data and opens the target file.

Other habit setting information can be recorded in the same manner. For example, VOLUME corresponds to an audio volume value, in which the volume level is indicated by a number. Some settings consisting of two options, such as audio ON and audio OFF, may directly use the number 1 to indicate ON and the number 2 to indicate OFF.

For other types of files, the above-described approach can also be used to carry out recording, reading, and providing the configuration file to the application program, and this needn't be elaborate any further.

In Step 105, the application program opens the target file according to a default setting.

Opening a file according to a default setting by using the application program means that the file is opened according to a setting tacitly admitted by the application program itself, which is relative to the habit setting information in the application program.

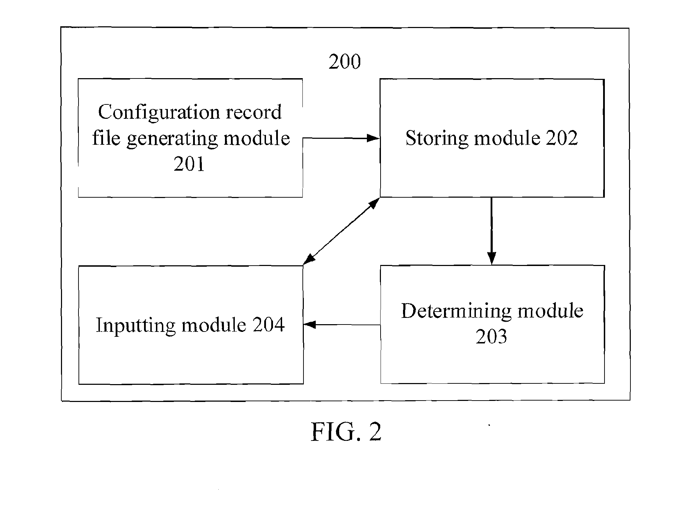

Please refer to FIG. 2, which is a schematic structural diagram showing a mobile phone in accordance with an embodiment of the present invention. As shown in FIG. 2, the mobile phone 200 comprises: a configuration record file generating module 201 for generating, before an application program in the mobile phone is closed to stop processing a target file, habit setting information in response to a user's selection according to the user's use manner for the target file and saving the habit setting information in a configuration record file; a storing module 202 for storing the configuration record file in a preset directory; a determining module 203 for determining, when the application program is restarted to process the target file, whether the configuration record file is present in the preset directory; and an inputting module 204 for reading the configuration record file, retrieving the habit setting information in the configuration record file, and introducing the habit setting information to the application program when the determining module 203 determines that the configuration record file is present in the preset directory, so as to enable the application program to open the target file according to the habit setting information.

When the determining module 203 determines that the configuration record file is not present in the preset directory, the application program opens the target file according to a default setting.

The specific working process and working principle of the mobile phone 200 are referred to the descriptions of the mobile phone file configuration method mentioned above, and these needn't be elaborate any further.

As to implementations, the respective modules mentioned above can be implemented by various script languages such as C, C++, PHP, RUBY, and PYTHON, and the present invention is not limited thereto.

Above all, in the technical scheme of the present invention, the habit setting information generated when the mobile phone user uses the application program in the mobile phone to process a file is recorded in the configuration record file. When the application program opens the file again, the habit setting information is used to configure the application program such that the application program is automatically adjusted according to the user's use habits for different files, thereby reducing troublesome operations and enhancing the user's experience.

The above descriptions are specific embodiments of the present invention but the scope of the present invention must not be limited thereto. All equivalent structure alterations or equivalent process alterations made according to the specification and the appended drawings of the present invention, or its applications directly or indirectly used in other related technical fields, are within the protective scope of the present invention.

## Claims

1. A file configuration method for a mobile phone, comprising steps of:
a. generating, before an application program in the mobile phone is closed to stop processing a target file, habit setting information in response to a user's selection according to the user's use manner for the target file and saving the habit setting information in a configuration record file;
b. storing the configuration record file in a preset directory;
c. determining, when the application program is restarted to process the target file, whether the configuration record file is present in the preset directory; and
d. if yes, reading the configuration record file, retrieving the habit setting information in the configuration record file, and introducing the habit setting information to the application program so as to enable the application program to open the target file according to the habit setting information; if no, the application program opening the target file according to a default setting;
wherein the configuration record file is given a name identical to a file name of the target file, or based on an address where the target file is stored, or a characteristic code of the target file.

2. The method according to Claim 1, wherein the habit setting information comprises at least one of a font size value, a backlight brightness value, a screen zoom-in value, a screen zoom-out value, and an audio volume value.

3. The method according to Claim 1, wherein the preset directory is a directory where the target file is located.

4. The method according to Claim 1, wherein in Step b, the configuration record file is given a hidden attribute and is stored in the preset directory.

5. The method according to Claim 1, wherein the target file is an audio file, a video file, a text file, or an image file.

6. A file configuration method for a mobile phone, comprising steps of:
a. generating, before an application program in the mobile phone is closed to stop processing a target file, habit setting information in response to a user's selection according to the user's use manner for the target file and saving the habit setting information in a configuration record file;
b. storing the configuration record file in a preset directory;
c. determining, when the application program is restarted to process the target file, whether the configuration record file is present in the preset directory; and
d. if yes, reading the configuration record file, retrieving the habit setting information in the configuration record file, and introducing the habit setting information to the application program so as to enable the application program to open the target file according to the habit setting information.

7. The method according to Claim 6, wherein in Step d, if no, the application program opens the target file according to a default setting.

8. The method according to Claim 6, wherein the configuration record file is given a name identical to a file name of the target file, or based on one of an address where the target file is stored and a characteristic code of the target file.

9. The method according to Claim 6, wherein the habit setting information comprises at least one of a font size value, a backlight brightness value, a screen zoom-in value, a screen zoom-out value, and an audio volume value.

10. The method according to Claim 6, wherein the preset directory is a directory where the target file is located.

11. The method according to Claim 6, wherein in Step b, the configuration record file is given a hidden attribute and is stored in the preset directory.

12. The method according to Claim 6, wherein the target file is an audio file, a video file, a text file, or an image file.

13. A mobile phone, comprising:
a configuration record file generating module for generating, before an application program in the mobile phone is closed to stop processing a target file, habit setting information in response to a user's selection according to the user's use manner for the target file and saving the habit setting information in a configuration record file;
a storing module for storing the configuration record file in a preset directory;
a determining module for determining, when the application program is restarted to process the target file, whether the configuration record file is present in the preset directory; and
an inputting module for reading the configuration record file, retrieving the habit setting information in the configuration record file, and introducing the habit setting information to the application program when the determining module determines that the configuration record file is present in the preset directory, so as to enable the application program to open the target file according to the habit setting information.

14. The mobile phone according to Claim 13, wherein when the determining module determines that the configuration record file is not present in the preset directory, the application program opens the target file according to a default setting.

15. The mobile phone according to Claim 13, wherein the configuration record file is given a name identical to a file name of the target file, or based on one of an address where the target file is stored and a characteristic code of the target file.

16. The mobile phone according to Claim 13, wherein the habit setting information comprises at least one of a font size value, a backlight brightness value, a screen zoom-in value, a screen zoom-out value, and an audio volume value.

17. The mobile phone according to Claim 13, wherein the preset directory is a directory where the target file is located.

18. The mobile phone according to Claim 13, wherein the storing module stores the configuration record file in the preset directory and gives a hidden attribute to the configuration record file.

19. The mobile phone according to Claim 13, wherein the target file is an audio file, a video file, a text file, or an image file.
